# EUROPÄISCHE PATENTSCHRIFT

(11) **EP 0 912 823 B1**
(45) Veröffentlichungstag und Bekanntmachung des Hinweises auf die Patenterteilung: **27.12.2000**
(21) Anmeldenummer: 97934469.4
(22) Anmeldetag: 16.07.1997
(51) Int. Cl.: F02D 41/34, F02D 37/02

(54) **VERFAHREN ZUM STEUERN DER EINSPRITZUNG EINER SCHNELLAUFENDEN ZWEITAKT-BRENNKRAFTMASCHINE SOWIE VORRICHTUNG ZUR DURCHFÜHRUNG DES VERFAHRENS**
METHOD OF CONTROLLING INJECTION IN A HIGH-SPEED TWO-STROKE INTERNAL COMBUSTION ENGINE AND DEVICE FOR CARRYING OUT THIS METHOD
PROCEDE DE COMMANDE DE L'INJECTION D'UN MOTEUR A COMBUSTION INTERNE DEUX TEMPS RAPIDE ET DISPOSITIF PERMETTANT DE METTRE LEDIT PROCEDE EN OEUVRE

(30) Priorität: 17.07.1996 DE 19628740
(43) Veröffentlichungstag der Anmeldung: 06.05.1999
(73) Patentinhaber: Dolmar GmbH, 22045 Hamburg (DE)
(72) Erfinder: BISCHOFF, Dietmar, D-98530 Oberstadt (DE); KLARE, Hartmut, D-98554 Benshausen (DE); SINGER, Andreas, D-08427 Fraureuth (DE); SCHÖNHAAR, Jochen, D-22529 Hamburg (DE)
(74) Vertreter: Richter, Werdermann & Gerbaulet
(86) Internationale Anmeldenummer: EP9703794
(87) Internationale Veröffentlichungsnummer: WO9803784

(56) Entgegenhaltungen:
- EP-A- 0 494 467
- FR-A- 2 578 337
- US-A- 5 325 835
- US-A- 5 329 907
- US-A- 5 392 753
- US-A- 5 476 082

## Beschreibung

### Technisches Gebiet

Die Erfindung betrifft ein Verfahren zum Steuern der Einspritzung einer schnelllaufenden Zweitakt-Brennkraftmaschine mit Kraftstoffeinspritzung sowie eine Vorrichtung zur Durchführung des Verfahrens.

### Stand der Technik

Bei schnelllaufenden Zweitakt-Brennkraftmaschineen mit Kraftstoffeinspritzung, wie sie insbesondere in motorbetriebenen Handarbeitsgeräten, wie z. B. Kettensägen, Heckenscheren, Rasenmähern u. dgl. eingesetzt werden, besteht generell das Bedürfnis, im gesamten Drehzahlbereich, der bis zu 15.000 U/min reichen kann, optimale Betriebsbedingungen sicherzustellen, welche sich in einem günstigen Leistungsverlauf, einem geringen Schadstoffausstoß, sowie in einem gleichförmigen Motorlauf äußern. Zur Erfüllung der verschiedenen Anforderungen werden zunehmend elektronische, rechnerbestückte Motorsteuerungen eingesetzt, durch welche der Einspritzvorgang und die Zündung in Abhängigkeit von den jeweiligen Betriebszuständen des Motors gesteuert werden. Ein Beispiel für eine solche Motorsteuerung aus dem Gebiet der größeren, Mehrzylinder-Viertaktmotoren, ist z. B. aus der DE-A1-39 05 156 bekannt.

Aus der EP-A1-0 675 277 ist weiterhin ein elektronisches System zur Berechnung der Einspritzdauer bekannt, welches auf der Basis einer Mehrzahl von Meßsignalen aus dem Motor eine geeignete Einspritzdauer ableitet, wobei zur Bestimmung der Motorlast ein Drucksensor im Einlaßkanal vorgesehen ist. Zur Kompensation der Verzögerungszeit, die aufgrund der Ansprechverzögerung des Drucksensors der Signalaufbereitung und der Betätigung des Einspritzventils entsteht, ist in dem System eine spezielle Kompensationsschaltung vorgesehen.

Aus der EP-A2-0 676 539 ist eine elektronische Einspritzssteuerung für eine Verbrennungskraftmaschine bekannt, bei der durch eine spezielle Ausgestaltung des Einspritzprozesses und eine entsprechende Berechnung der Einspritzzeiten der Einfluß von Kraftstoffverlusten durch Filmbildung an den Wänden des Einlaßkanals berücksichtigt wird.

Problematisch ist bei den schnelllaufenden, kompakten Zweitakt-Brennkraftmaschinen mit Kraftstoffeinspritzung, dass einerseits aufgrund der teilweise hohen und ungleichförmigen Drehzahlen zum Berechnen der Steuerungsgrößen nur eine äußerst geringe Rechenzeit zur Verfügung steht, und dass andererseits nur ein geringes Angebot an "Bordenergie" vorhanden ist. Darüber hinaus müssen die Lösungen für die Motorsteuerung derartiger Kompaktmotoren äußerst kostengünstig sein.

In der EP-A2-0 494 467 ist vorgeschlagen worden, für die Bestimmung der Einspritzgrößen und die Steuerung der Einspritzung zwei getrennte Rechner zu verwenden. Gemäß den Ansprüchen 8 und 9 dieser Druckschrift ist der zweite Rechner mit einem ersten Speicher und einem zweiten Speicher verbunden, die Einspritzgrößen sowie Zündverzögerungswerte für unterschiedliche Drehzahlen enthalten und zur Berechnung herangezogen werden. Diese Kenngrößen gestützte Berechnung ist jedoch nur für den Fall vorgesehen, dass der erste Rechner ausfällt oder ein sonstiger Fehler am ersten Rechner auftritt. Im Normalbetrieb wird diese Art der Berechnung nicht durchgeführt. Eine zeitoptimierte Berechnung für den Normalbetrieb wird damit nicht erreicht.

### Darstellung der Erfindung, Aufgabe, Lösung, Vorteile

Es ist daher Aufgabe der Erfindung ein Verfahren zur Steuerung solcher Motoren anzugeben, welches den vorliegenden Gegebenheiten Rechnung trägt und ein optimales Betriebsverhalten verwirklicht, sowie eine Vorrichtung zur Durchführung des Verfahrens anzugeben. Die Aufgabe wird durch ein im Anspruch 1 angegebenes Verfahren und durch eine in Anspruch 8 angegebene Vorrichtung gelöst.

Dabei ist vorgesehen, dass fortlaufend in einem ersten Schritt Parameter der Zweittakt-Brennkraftmaschine gemessen werden, welche den Betriebszustand der Zweitakt-Brennkraftmaschine kennzeichnen, in einem zweiten Schritt aus den gemessenen Parametern die für den momentanen Betriebszustand der Zweitakt-Brennkraftmaschine angemessene Einspritzmenge bzw. Einspritzdauer mit einem ersten Rechner (22) berechnet wird, und in einem dritten Schritt mit einem zweiten Rechner (20) unter Verwendung der berechneten Einspritzmenge bzw. Einspritzdauer und nach Maßgabe bestimmter von der Zweitakt-Brennkraftmaschine abgenommener Bezugssignale Einspritzbeginn bzw. Einspritzwinkel und Einspritzmenge bzw. Einspritzdauer der Zweittakt-Brennkraftmaschine gesteuert werden. Durch die Aufteilung des Steuerungsprozesses in unterschiedliche, selbsttätig ablaufende Verfahrensschritte lässt sich eine schnelle und flexible Steuerung erreichen.

Besonders zeitökonomisch ist das Verfahren, dadurch dass zur Berechnung der angemessenen Einspritzmenge bzw. Dauer aus bestimmten Betriebsdaten, wie Drehzahl-, Last- und Temperatursignalen im zweiten Schritt Kennwerte berechnet werden. Diese werden als optimierte Einspritzparameter in Abhängigkeit von den möglichen Betriebsbedingungen der Zweitakt-Brennkraftmaschine hinterlegt.

Zur zeitlichen Entkopplung des zweiten und dritten Verfahrensschrittes ist es besonders vorteilhaft, wenn gemäß einer bevorzugten Ausführungsform die im zweiten Schritt berechnete angemessene Einspritzmenge bzw. Einspritzdauer vor Beginn des dritten Schrittes zwischengespeichert wird.

Eine weitere bevorzugte Ausführungsform des Verfahrens nach der Erfindung zeichnet sich dadurch aus, dass als Bezugssignal bzw. Triggerimpuls für den dritten Schritt der Zündimpuls verwendet wird, und dass als weiterer Triggerimpuls ein von der Zweitakt-Brennkraaftmaschine abgenommener kurbelwinkelbezogener Hallgeberimpuls verwendet wird. Durch die Verwendung von zwei auf unterschiedliche Kurbelwinkel bezogene Triggemimpulse lässt sich über den ganzen Drehzahlbereich eine optimierte Einspritzsteuerung (Einspritzbeginn/-winkel) erreichen.

Die erfindungsgemäße Vorrichtung umfasst einen ersten Rechner, welcher als Eingangsgrößen die an der Zweitakt-Brennkraftmaschine gemessenen Parameter erhält und daraus die Einspritzmenge bzw. Einspritzdauer berechnet, sowie einen zweiten Rechner, welcher als Eingangsgröße die vom ersten Rechner berechnete Einspritzmenge bzw. Einspritzdauer erhält und daraus nach Maßgabe der Bezugssignale Einspritzbeginn bzw. Einspritzwinkel berechnet und ausgangsseitig mit einem Einspritzventil der Zweitakt-Brennkraftmaschine verbunden ist, und zeichnet sich dadurch aus, dass der erste Rechner mit einem Kennfeldspeicher verbunden ist, in welchem ein Kennfeld der Zweitakt-Brennkraftmaschine abgelegt ist, und daß zwischen dem ersten Rechner und dem zweiten Rechner ein Kennwertspeicher angeordnet ist, in welchem die berechneten Ergebnisse des ersten Rechners zwischengespeichert werden.

Weitere Ausführungsformen der Erfindung ergeben sich aus den abhängigen Ansprüchen.

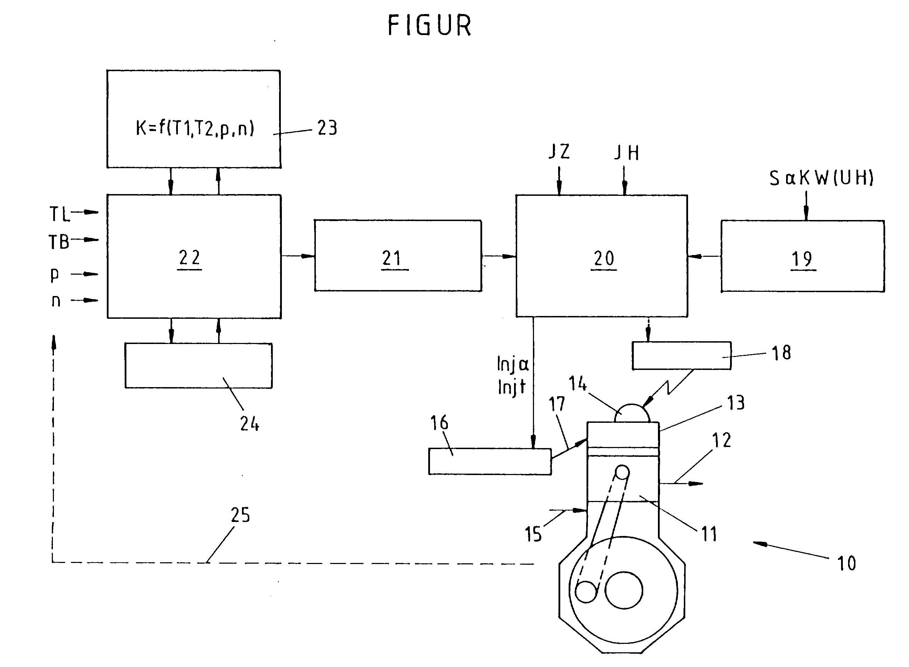

### Kurze Beschreibung der Zeichnung

Die Erfindung soll nachfolgend anhand von Ausführungsbeispielen im Zusammenhang mit der Zeichnung näher erläutert werden. Die einzige Figur zeigt ein schematisiertes Blockschaltbild eines bevorzugten Ausführungsbeispiels einer Steuerung nach der Erfindung.

### Bester Weg zur Ausführung der Erfindung

Das in der Figur dargestellte Steuerungsschema geht aus von einem schnellaufenden Zweitakt-Verbrennungsmotor 10 mit Kraftstoffeinspritzung. Der Motor 10 umfaßt einen Zylinder 13, in welchem sich ein Kolben 11 auf- und abbewegt. Der Kolben 11 steuert zugleich auf die übliche Weise über Überströmkanäle und Einlaßschlitze die Ansaugung der Verbrennungsluft, welche über einen Einlaßkanal 15 (schematisch durch einen Pfeil dargestellt) eingesaugt wird. Für den Ausstoß der Verbrennungsgase ist ein Auslaßkanal 12 (ebenfalls durch einen Pfeil dargestellt) vorgesehen. Der Kraftstoff wird, gesteuert durch ein elektromagnetisch betätigtes Einspritzventil 16, schräg nach oben durch einen Einspritzkanal (17) in den Zylinder 13 und den im Zylinderkopf angeordneten (halbkugelförmigen) Brennraum 14 eingespritzt. Nach Bildung des Gemisches erfolgt die Zündung mittels einer in den Brennraum 14 ragenden Zündkerze, die an eine Zündung 18 angeschlossen ist.

Die Steuerung des Zweitakt-Verbrennungsmotors 10 umfaßt zwei Rechner 22 und 20. Der erste Rechner 22 erhält eingangsseitig als Eingangsgrößen verschiedene Parameter, wie z. B. die Ansauglufttemperatur T_{L'} eine Bauteiltemperatur T_{B}, den Ansaugluftdruck p und die Drehzahl n, welche den Betriebszustand der Zweitakt-Brennkraftmaschine 10 kennzeichnen. Die Parameter werden in einem ersten Schritt an der Zweitakt-Brennkraftmaschine 10 gemessen und über den (gestrichelt gezeichneten) Messwertübertragungsweg 25 an den ersten Rechner übermittelt. Aus den am Eingang anstehenden Parametern berechnet der erste Rechner 22 in einem zweiten Schritt eine dem momentanen Betriebszustand des Motors angemessene Einspritzmenge bzw. Einspritzdauer Injₜ bzw. den erforderlichen Zündwinkel. Zur Berechnung dieser Kennwerte wird ein Kennfeld K=f(T₁, T₂, p, n) verwendet, welches die Kennwerte für die jeweilige Einspritzmenge und den jeweiligen Zündwinkel in Abhängigkeit vom Lastzustand des Motors und seinen Betriebsparametern aufweist. Das Kennfeld K ist in einem Kennfeldspeicher 23 abgelegt, auf den der erste Rechner 22 zugreifen kann. Die zum jeweiligen Betriebszustand des Motors aus dem Kennfeld K ermittelten Kennwerte werden dann in einem dem ersten Rechner 22 nachgeschalteten Kennwertspeicher 21 zur Weiterverarbeitung durch den zweiten Rechner 20 abgelegt und zwischengespeichert. Desweiteren kann am ersten Rechner 22 eine Schnittstelle 24 vorgesehen werden, über die zu Service- und Kontrollzwecken auf den ersten Rechner 22 zugegriffen werden kann.

Der zweite Rechner 20 übernimmt die eigentliche Steuerung des Zweitakt-Verbrennungsmotors 10. Er erhält vom Motor drehzahlabhängig bestimmte Triggersignale, nämlich den Zündimpuls J und/oder einen Hallgeberimpuls J. Der Hallgeberimpuls J_{Hall} stammt von einem Hallgeber, der zusätzlich am Motor angeordnet ist, und einen weiteren Kurbelwinkel markiert. Ein solcher zusätzlicher Impuls ist von Vorteil, wenn bei stark unterschiedlichen Drehzahlen ein anderer Triggerbeginn benötigt wird, um Störungen im Gleichlauch des Motors zu verhindern. Der zweite Rechner 20 holt die im Kennwertspeicher 21 abgelegten Kennwerte und legt nach Maßgabe der ausgespeicherten Kennwerte und der Triggerimpulse J_{Zündung} und J_{Hall} den Einspritzbeginn bzw. Einspritzwinkel inj_{Alpha} fest und steuert das Einspritzventil 16 mit den Werten inj_{Alpha} und injₜ. Zusätzlich kann auch noch (über den Zündwinkel) die Zündung 18 gesteuert werden.

An den zweiten Rechner 20 kann weiterhin ein Korrekturspeicher 19 angeschlossen sein, der folgende Aufgabe hat: Bei motorgetriebenen Handarbeitsgeräten ist es häufig der Fall, daß zur Energieversorgung an den Motor ein Generator angekoppelt ist, welcher nach Maßgabe seiner Polzahl periodische Signale S_{AlphaKW}(U_{H}) in Form von pulsierenden Halbwellen abgibt, die als Bezugssignale für bestimmte Kurbelwinkel verwendet werden können. Aufgrund von Fertigungstoleranzen und anderen Fehlerquellen ist es dabei jedoch erforderlich, den Halbwellen nicht direkt den Kurbelwinkel zuzuordnen, der jeweils der Lage des zugehörigen Generatorpoles entspricht, sondern Korrekturfaktoren zu bestimmen, welche die o. g. Fehler berücksichtigen. Die entsprechend ermittelten Korrekturfaktoren sind im Korrekturspeicher 19 abgelegt. Aus den jeweiligen periodischen Signalen S_{AlphaKW}(U_{H}) werden dann die zugeordneten Kurbelwinkel mittels der zugehörigen, im Korrekturspeicher 19 abgelegten Korrekturfaktoren bestimmt und an den zweiten Rechner 20 weitergeleitet und als Bezugssignale benutzt, so daß über den gesamten Kurbelwinkelbereich und Drehzahlbereich eine sichere und genaue Synchronisation der Einspritz- und Zündungsparameter ermöglicht wird.

Insgesamt ergibt sich mit der Erfindung für kleine, schnellaufende Zweitakt-Verbrennungsmotoren mit Kraftstoffeinspritzung eine wirksame und schnelle Steuerung der Einspritz- und Zündparameter, die hinsichtlich Gleichlauf, Schadstoffemission und Leistungsverlauf zu einem optimierten Betriebsverhalten führt.

### Bezugszeichenliste:

- Zweitakt-Brennkraftmaschine: 10
- Kolben: 11
- Auslaßkanal (Verbrennungsgase): 12
- Zylinder: 13
- Brennraum: 14
- Einlaßkanal (Verbrennungsluft): 15
- Einspritzventil: 16
- Einspritzkanal: 17
- Zündung: 18
- Korrekturspeicher: 19
- zweiter Rechner: 20
- Kennwertspeicher: 21
- erster Rechner: 22
- Kennfeldspeicher: 23
- Schnittstelle (Service/Kontrolle): 24
- Meßwertübertragungsweg: 25
- Einspritzwinkel: inj_{Alpha}
- Einspritzdauer: injₜ
- Zündimpuls: J_{Zündung}
- Hallgeberimpuls: J_{Hall}
- Kennfeld: K
- periodisches Signal (Heizgenerator): S_{AlphaKW}(U_{H})
- Ansauglufttemperatur: T_{L}
- Bauteiltemperatur: T_{B}
- Ansaugluftdruck: p
- Drehzahl: n

## Patentansprüche

1. Verfahren zum Steuern der Einspritzung einer schnelllaufenden Zweitakt-Brennkraftmaschine (10) mit Kraftstoffeinspritzung, wobei fortlaufend in einem ersten Schritt Parameter (TL, TB, p, n) der Zweitakt-Brennkraftmaschine (10) gemessen werden, welche den Betriebszustand der Zweitakt-Brennkraftmaschine (10) kennzeichnen, in einem zweiten Schritt aus den gemessenen Parametern (TL, TB, p, n) die für den momentanen Betriebszustand der Zweitakt-Brennkraftmaschine (10) angemessene Einspritzmenge bzw. Einspritzdauer (injt) mit einem ersten Rechner (22) berechnet wird, und in einem dritten Schritt mit einem zweiten Rechner (20) unter Verwendung der berechneten Einspritzmenge bzw. Einspritzdauer (injt) und nach Maßgabe bestimmter von der Zweitakt-Brennkraftmaschine (10) abgenommener Bezugssignale (JZ und/oder JHall) die Einspritzmenge bzw. -dauer durch ein permanentes Spannungssignal (SAlpha KW (UH)) kurbelwinkelsynchronisiert gesteuert werden, wobei zur Berechnung der angemessenen Einspritzmenge bzw. Einspritzdauer (injt) im zweiten Schritt ein Kennfeld (K) verwendet wird, in welchem die optimierten Einspritzparameter in Abhängigkeit von den möglichen Betriebsbedingungen der Zweitakt-Brennkraftmaschine (10 hinterlegt sind.

2. Verfahren nach Anspruch 1,
dadurch gekennzeichnet,
dass als weitere Bezugssignale drehzahlbezogene periodische Signale (SAlpha (UH)) in Form von Spannungshalbwellen verwendet werden, welche von einem an die Zweitakt-Brennkraftmaschine (10) angekoppelten Generator abgegeben werden.

3. Verfahren nach einem der Ansprüche 1 und 2,
dadurch gekennzeichnet,
dass die im zweiten Schritt berechnete angemessene Einspritzmenge bzw. Einspritzdauer (injt) vor Beginn des dritten Schrittes zwischengespeichert wird.

4. Verfahren nach einem der Ansprüche 1 bis 3,
dadurch gekennzeichnet,
dass als Bezugssignal bzw. Triggerimpuls für den dritten Schritt der Zündimpuls (JZündung) verwendet wird.

5. Verfahren nach Anspruch 4,
dadurch gekennzeichnet,
dass als weiterer Triggerimpuls ein von der Zweitakt-Brennkraftmaschine (10) abgenommener kurbelwinkelbezogener Hallgeberimpuls (JHall) verwendet wird.

6. Verfahren nach Anspruch 2,
dadurch gekennzeichnet,
dass aus den jeweiligen periodischen Signalen (SAlphaKW (UH)) die zugeordneten Kurbelwinkel mittels zugehöriger, in einem Korrekturspeicher (19) abgelegter Korrekturfaktoren bestimmt werden.

7. Verfahren nach einem der Ansprüche 1 bis 6,
dadurch gekennzeichnet,
dass im zweiten Schritt zusätzlich der für den momentanen Betriebszustand angemessene Zündwinkel berechnet wird, und im dritten Schritt auch der Zündwinkel der Zweitakt-Brennkraftmaschine (10) gesteuert wird.

8. Vorrichtung zur Durchführung des Verfahrens nach einem der Ansprüche 1 bis 7, umfassend einen ersten Rechner 22 der eine Zweitakt-Brennkraftmaschine steuert und welcher als Eingangsgröße die an der Zweitakt-Brennkraftmaschine (10) gemessenen Parameter (TL, TB, p, n) erhält und daraus die Einspritzmenge bzw. Einspritzdauer (injt) berechnet, sowie einen zweiten Rechner (10), welcher als Eingangsgröße die vom ersten Rechner (22) berechnete Einspritzmenge bzw. Einspritzdauer (injt) erhält und daraus nach Maßgabe der Bezugssignale (JZündung, JHall) und eines permanenten Spannungssignals (SAlphaKW (UH)) Einspritzsbeginn bzw. Einspritzwinkel (injAlpha) berechnet und ausgangsseitig mit einem Einspritzventil (16) der Zweitakt-Brennkraftmaschine (10) verbunden ist, wobei der erste Rechner (22) mit einem Kennfeldspeicher 823) verbunden ist, in welchem das optimierte Kennfeld (K) der Zweitakt-Brennkraftmaschine (10) abgelegt ist.

9. Vorrichtung nach Anspruch 8,
dadurch gekennzeichnet,
dass zwischen dem ersten Rechner (22) und dem zweiten Rechner (20) ein Kennwertspeicher (21) angeordnet ist, in welchem die berechneten Ergebnisse des ersten Rechners (22) zwischengespeichert werden.

10. Vorrichtung nach einem der Ansprüche 8 und 9,
dadurch gekennzeichnet,
dass der zweite Rechner (20) mit einem Korrekturspreicher (19) verbunden ist, in welchem Korrekturfaktoren zur Berechnung von zugehörigen Kurbelwinkeln für von der Zweitakt-Brennkraftmaschine (10) erzeugte drehzahlabhängige Bezugssignale abgelegt sind.

## Claims

1. A method for the control of the injection of a high-speed two-stroke internal combustion engine (10) with fuel injection, whereby, in a first step, parameters (TL, TB, p, n) of the two-stroke internal combustion engine (10) are continuously measured which characterize the operating state of the two-stroke internal combustion engine (10), in a second step from the measured parameters (TL, TB, p, n) the injection quantity or the injection duration (injt) appropriate for the momentary operating state of the two-stroke internal combustion engine (10) is computed with a first computer (22) and the injection quantity or the injection duration are controlled in a crank angle synchronized manner by means of a permanent voltage signal (SAlpha KW(UH)) in a third step with a second computer (20), while use is made of the computed injection quantity or the injection duration (injt) and according to certain reference signals (JZ and/or Jhall) received from the two-stroke internal combustion engine (10), whereby for the computation of the appropriate injection quantity or injection duration (injt) in the second step a characteristic diagram (K) is employed in which the optimized injection parameters are deposited in dependence upon the possible operating conditions of the two-stroke internal combustion engine (10).

2. A method according to claim 1,
characterized in
that, as further reference signals, speed-related periodic signals (SAlpha (UH)) in the form of voltage half waves are used which are emitted by a generator coupled to the two-stroke internal combustion engine (10).

3. A method according to any of the claims 1 and 2,
characterized in
that the appropriate injection quantity or injection duration (injt) computed in the second step is temporarily stored before the start of the third step.

4. A method according to any of the claims 1 to 3,
characterized in
that, as reference signal or trigger pulse, the ignition pulse (Jignition) is used for the third step.

5. A method according to claim 4,
characterized in
that, as further trigger pulse, a crank angle related Hall transmitter pulse (JHall) received from the two-stroke internal combustion engine (10) is used.

6. A method according to claim 2,
characterized in
that, from the respective periodic signals (SAlphaKW (UH)), the allocated crank angles are determined with the aid of associated correction factors deposited in a correction memory (19).

7. A method according to any of the claims 1 to 6,
characterized in
that, in the second step, the ignition angle appropriate for the momentary operating state is additionally computed and, in the third state, also the ignition angle of the two-stroke internal combustion engine (10) is controlled.

8. A device for the implementation of the method according to any of the claims 1 to 7, comprising a first computer (22) which controls a two-stroke internal combustion engine and which receives, as input values, the parameters (TL, TB, p, n) measured on the two-stroke internal combustion engine (10) and computes therefrom the injection quantity or injeciton duration (injt), as well as a second computer (20) which, as input value, receives the injection quantity or injection duration (injt) computed by the first computer (22) and computes therefrom according to the reference signals (Jignition, JHall) and a permanent voltage signal (SAlphaKW(UH)), the injection start or the injection angle (injAlpha) and, on the output side, is connected with an injection valve (16) of the two-stroke internal combustion engine (10), whereby the first computer (22) is connected with a characteristic diagram memory (23) in which the optimized characteristic diagram (K) of the two-stroke internal combustion engine (10) is deposited.

9. A device according to claim 8,
characterized in
that between the first computer (22) and the second computer (20) a parameter memory (21) is placed in which the computed results of the first computer (22) are temporarily stored.

10. A device according to any of the claims 8 and 9,
characterized in
that the second computer (20) is connected with a correction memory (19) in which correction factors are deposited for the computation of associated crank angles for speed-dependent reference signals generated by the two-stroke internal combustion engine (10).

## Revendications

1. Procédé pour contrôler l'injection d'un moteur rapide à combustion interne à deux temps (10) avec injection de fuel, des paramètres (TL, TB, p, n) du moteur à combustion interne à deux temps (10) étant mesurés continuellement dans une première étape, paramètres qui caractérisent l'état de fonctionnement du moteur à combustion interne à deux temps (10), la quantité d'injection ou la durée d'injection (injt) appropriée pour l'état de fonctionnement momentané du moteur à combustion interne à deux temps (10) étant calculée dans une seconde étape avec un premier ordinateur (22) à partir des paramètres mesurés (TL, TB, p, n) et la quantité d'injection ou la durée d'injection étant controlées dans une troisième étape avec un second ordinateur (20) de manière synchronisée avec l'angle de manivelle par un signal de tension permanent (SAlpha KW (UH)) en utilisant la quantité d'injection ou la durée d'injection (injt) calculée et en conformité avec certains signaux de référence (JZ et/ou JHall) pris sur le moteur à combustion interne à deux temps (10), un diagramme caractéristique (K) étant utilisé pour le calcul de la quantité d'injection ou la durée d'injection (injt) appropriée dans la seconde étape, diagramme dans lequel les paramètres d'injection optimalisés sont déposés en dépendance des conditions de fonctionnement possibles du moteur à combustion interne à deux temps (10).

2. Procédé selon la revendication 1,
caractérisé en ce
que, comme autres signaux de référence, on utilise des signaux périodiques relatifs à la vitesse (SAlpha (UH)) en forme de demi-ondes de tension qui sont émises par un générateur couplé au moteur à combustion interne à deux temps (10).

3. Procédé selon l'une des revendications 1 et 2,
caractérisé en ce
que la quantité d'injection ou la durée d'injection (injt) appropriée calculée dans la seconde étape est mémorisée temporairement avant le début de la troisième étape.

4. Procédé selon l'une des revendications 1 à 3,
caractérisé en ce
que l'impulsion d'ignition (Jignition) est utilisée comme signal de référence ou impulsion de déclenchement pour la troisième étape.

5. Procédé selon la revendication 4,
caractérisé en ce
qu'une impulsion de générateur hall (JHall) qui a rapport à l'angle de manivelle, prise sur le moteur à combustion interne à deux temps (10), est utilisée comme autre impulsion de déclenchement.

6. Procédé selon la revendication 2,
caractérisé en ce
que les angles de manivelle affectés sont déterminés à partir des signaux périodiques respectifs (SAlphaKW (UH)) au moyen de facteurs de correction correspondants déposés dans une mémoire de correction (19).

7. Procédé selon l'une des revendications 1 à 6,
caractérisé en ce
que l'angle d'ignition approprié pour l'état de fonctionnement momentané est calculé en plus dans la seconde étape et que dans la troisième étape l'angle d'ignition du moteur à combustion interne (10) est aussi contrôlé.

8. Dispositif pour l'exécution du procédé selon l'une des revendications 1 à 7, comprenant un premier ordinateur (22) qui commande un moteur à combustion interne à deux temps et qui reçoit comme grandeur d'entrée les paramètres (TL, TB, p. n) mesurés sur le moteur à combustion interne à deux temps (10) et qui calcule à partir de ceux-ci la quantité d'injection ou la durée d'injection (injt), ainsi qu'un second ordinateur (10) qui reçoit, comme grandeur d'entrée, la quantité d'injection ou la durée d'injection (injt) calculée par le premier ordinateur (22) et qui calcule à partir de là, en conformité avec des signaux de référence (Jignition, JHall) et un signal de tension permanent (SAlphaKW (UH)) le début de l'injection ou l'angle d'injection (injAlpha) et qui est relié, côté sortie, à une soupape d'injection (16) du moteur à combustion interne à deux temps (10), le premier ordinateur (22) étant relié à une mémoire de diagramme caractéristique (23) dans laquelle le diagramme caractéristique optimalisé (K) du moteur à combustion interne à deux temps (10) est déposé.

9. Dispositif selon la revendication 8,
caractérisé en ce
qu'une mémoire de diagramme caractéristique (21) est placée entre le premier ordinateur (22) et le second ordinateur (20), mémoire dans laquelle les résultats calculés du premier ordinateur (22) sont mémorisés temporairement.

10. Dispositif selon l'une des revendications 8 et 9,
caractérisé en ce
que le second ordinateur (20) est relié à une mémoire de correction (19) dans laquelle des facteurs de correction sont déposés pour le calcul d'angles de manivelle correspondants pour des signaux de référence dépendant de la vitesse produits par le moteur à combustion interne à deux temps (10).
